# EUROPEAN PATENT APPLICATION

(11) **EP 2 937 936 A2**
(43) Date of publication of application: **28.10.2015**
(21) Application number: 14172792.5
(22) Date of filing: 17.06.2014
(51) Int. Cl.: H01Q 3/24, H04B 7/06, H01Q 1/22

(54) **Antenna distribution controller**

(30) Priority: 01.04.2014 TW 103112160
(71) Applicant: Wistron NeWeb Corporation, Hsinchu 308 (TW)
(72) Inventor: Chang, Chen-Chao, 308 Hsinchu (TW); Lin, Yung-Cheng, 308 Hsinchu (TW)
(74) Representative: Chamberlain, Alan James

(57) **Abstract**

An antenna distribution controller including a plurality of antenna connectors, at least one device connector, an antenna switching circuit and a controller is provided. The antenna connector is configured to connect an external antenna. The device connector is configured to connect an external wireless communication device. The antenna switching circuit has a plurality of antenna ports and at least one device port. These antenna ports are coupled to one of the antenna connectors, respectively. The device port is coupled to the device connector. The controller is coupled to a control terminal of the antenna switching circuit for controlling an electrical connection relationship between the antenna ports and the device port.

## Description

### BACKGROUND

### Technical Field

The invention relates to a communication device. Particularly, the invention relates to an antenna distribution controller.

### Related Art

More and more access points (APs), wireless access points (WAPs), home automation hubs/bridges and/or other wireless communication devices are used in a same building. The wireless communication devices used in the same building are generally operated in similar frequencies, and/or antennas of these wireless communication devices are probably close to each other, so that during a wireless communication process, the wireless communication devices probably interfere with each other.

### SUMMARY

The invention is directed to an antenna distribution controller, which is configured to select at least one of a plurality of external antennas to an external wireless communication device.

The invention provides an antenna distribution controller including a plurality of antenna connectors, at least one device connector, an antenna switching circuit and a controller. The antenna connector is configured to connect external antennas. The device connector is configured to connect external wireless communication devices. The antenna switching circuit has a plurality of antenna ports and at least one device port. The antenna ports are respectively coupled to one of the antenna connectors. The device port is coupled to one of the device connectors. The controller is coupled to a control terminal of the antenna switching circuit for controlling an electrical connection relationship between the antenna ports and the device port.

According to the above descriptions, the controller controls the electrical connection relationship between the antenna ports and the device port of the antenna switching circuit, so that the antenna distribution controller is capable of selecting at least one of the external antennas to the external wireless communication device.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a circuit block schematic diagram of an antenna distribution controller according to an embodiment of the invention.
FIG. 2 is a circuit block schematic diagram of an antenna distribution controller according to another embodiment of the invention.
FIG. 3 is a circuit schematic diagram of the antenna switching circuit of FIG. 2 according to an embodiment of the invention.
FIG. 4 is a circuit schematic diagram of the antenna switching circuit of FIG. 2 according to another embodiment of the invention.
FIG. 5 is a circuit block schematic diagram of an antenna distribution controller according to another embodiment of the invention.
FIG. 6 is a schematic diagram of an application of an antenna distribution controller according to an embodiment of the invention.
FIG. 7 is a schematic diagram of an application of an antenna distribution controller according to an embodiment of the invention.

### DETAILED DESCRIPTION OF DISCLOSED EMBODIMENTS

A term "couple" used in the full text of the disclosure (including the claims) refers to any direct and indirect connections. For example, if a first device is described to be coupled to a second device, it is interpreted as that the first device is directly coupled to the second device, or the first device is indirectly coupled to the second device through other devices or connection means. Moreover, wherever possible, components/members/steps using the same referential numbers in the drawings and description refer to the same or like parts. Components/members/steps using the same referential numbers or using the same terms in different embodiments may cross-refer related descriptions.

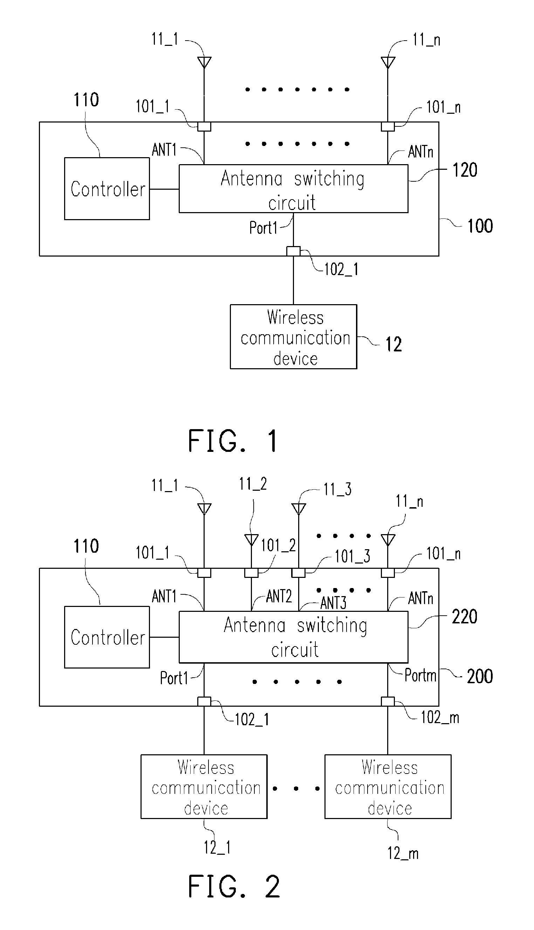

FIG. 1 is a circuit block schematic diagram of an antenna distribution controller according to an embodiment of the invention. The antenna distribution controller 100 includes a plurality of antenna connectors (for example, antenna connectors 101_1, ..., 101_n), at least one device connector (for example, a device connector 102_1), a controller 110 and an antenna switching circuit 120, where n is an integer. The antenna connectors 101_1, ..., 101_n are used for connecting at least one external antenna (for example, antennas 11_1, ..., 11_n). The external antennas 11_1-11_n are pluggably connected to the antenna connectors 101_1-101_n respectively. The antenna connectors 101_1-101_n can be bayonet Neill-Concelman (BNC) connectors or other radio frequency (RF) connectors. In some embodiments, the antenna connectors 101_1-101_n can be connectors complied with available antenna spectrum bands for example, 2.4 GHz, 5 GHz or a dual band). In some embodiments, one of or a plurality of the external antennas 11_1-11_n is/are directly plugged to the corresponding antenna connectors in the antenna connectors 101_1-101_n. In some other embodiments, one of or a plurality of the external antennas 11_1-11_n can be electrically connected to the corresponding antenna connectors in the antenna connectors 101_1-101_n through cables. By using the cables to transmit RF signals, allocation places of the external antennas 11_1-11_n can be different to an allocation place of the antenna distribution controller 100.

The device connector 102_1 is configured to connect at least one external wireless communication device (for example, a wireless communication device 12). The external wireless communication device 12 is pluggably connected to the device connector 102_1. The device connector 102_1 can be a BNC connector or other R connector. In some embodiments, the external wireless communication device 12 can be electrically connected to the device connector 102_1 through a cable. By using the cable to transmit RF signals, a allocation place of the wireless communication device 12 can be different to the allocation place of the antenna distribution controller 100. In different applications, the external wireless communication device 12 can be an access point (AP), a wireless access point (WAP), a wireless router, a home automation hub/bridge and/or other wireless communication device.

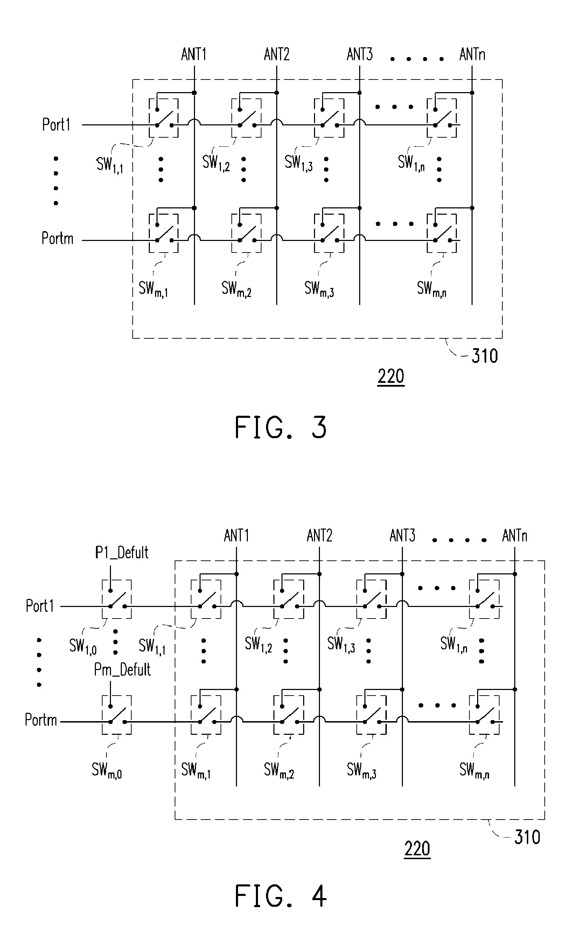

The antenna switching circuit 120 has a plurality of antenna ports (for example, antenna ports ANT1, ..., ANTn) and at least one device port (for example, a device port Port1). The antenna ports ANT1-ANTn are respectively coupled to one of the antenna connectors 101_1-101_n in a one-to-one manner. The device port Port1 is coupled to the device connector 102_1. In some embodiments, implementation details of the antenna switching circuit 120 can be deduced according related descriptions of FIG. 3 or FIG. 4 (which are described later).

The controller 110 is coupled to a control terminal of the antenna switching circuit 120. The controller 110 can control an electrical connection relationship between the antenna ports ANT1-ANTn and the device port Port1. In some embodiments, the controller 110 may include a connector mapping table. The connector mapping table can be stored in a non-volatile memory (not shown) or other types of memory device in internal of the controller 110. The connector mapping table may include a port relationship field, an antenna characteristic field and/or other fields. The port relationship field can be used to record the electrical connection relationship between the antenna ports ANT1-ANTn and the device port Port1. The antenna characteristic field can be used to record physical specification information such as spectrums/bands, gain values, types, locations or other antenna characteristic information of the external antennas 11_1-11_n coupled to the antenna ports ANT1-ANTn. In some other embodiments, the connector mapping table may record a default antenna port corresponding to the device port Port1. In some other embodiments, the connector mapping table may record available/restricted mapped ports in the antenna ports ANT1-ANTn that correspond to the device port Port1, and/or record currently used antenna ports in the antenna ports ANT1-ANTn. In other embodiments, the connector mapping table may record a usage policy/rules of the antenna ports ANT1-ANTn.

For example, in some applications, the controller 110 can connect the device port Port1 to the antenna port ANT1 during day time, and connect the device port Port1 to the antenna port ANTn at night. In some other applications, the external antenna 11_1 and the external antenna 11_n are respectively disposed in home and outdoors, so that the controller 110 can connect the device port Port1 to the antenna port ANT1 when the user is at home, and connect the device port Port1 to the antenna port ANTn when the user leaves home. In some other applications, the controller 110 can select to connect the device port Port1 to the antenna port ANT1 or the antenna port ANTn according to attenuation characteristics and/or coverage of the external antennas 11_1 and 11_n.

Therefore, the antenna distribution controller 100 of FIG. 1 may intelligently switch/change the electrical connection relationship between the antenna ports ANT1-ANTn and the device port Port1, such that the external wireless communication device 12 may strengthen and/or extend a RF signal coverage of a target region or select a different coverage.

FIG. 2 is a circuit block schematic diagram of an antenna distribution controller 200 according to another embodiment of the invention. Implementation details of the antenna distribution controller 200 of FIG. 2 can be deduced according to related descriptions of FIG. 1. In the embodiment of FIG. 2, the antenna distribution controller 200 includes a plurality of antenna connectors (for example, antenna connectors 101_1, 101_2, 101_3, ..., 101_n), at least one device connector (for example, device connectors 102_1, ..., 102_m), a controller 110 and an antenna switching circuit 220, where m, n are integers. The antenna connectors 101_1-101_n are used to selectively connect external antennas 11_1, 11_2, 11_3, ..., 11_n. One or a plurality of the external antennas 11_1-11_n can be electrically connected to the corresponding antenna connectors in the antenna connectors 101_1-101_n through cables. By using the cables to transmit RF signals, allocation places of the external antennas 11_1-11_n can be different to an allocation place of the antenna distribution controller 200. for example, the external antennas 11_1 and 11_3 can be disposed at remote sites, and the antennas 11_2 and 11_n can be disposed at local sites.

The device connectors 102_1-102_m can be selectively connected to external wireless communication devices 12_1, ..., 12_m. By using the cable to transmit RF signals, allocation places of the external wireless communication devices 12_1, ..., 12_m can be different to the allocation place of the antenna distribution controller 200. In different applications, the external wireless communication devices 12_1-12_m can be access points (APs), wireless access points (WAPs), wireless routers, home automation hubs/bridges and/or other wireless communication devices.

The antenna switching circuit 220 has a plurality of antenna ports (for example, antenna ports ANT1, ANT2, ANT3, ..., ANTn) and at least one device port (for example, a device port Port1, ..., a device port Portm). The antenna ports ANT1-ANTn are respectively coupled to one of the antenna connectors 101_1-101_n in the one-to-one manner. The device ports Port1-Portm are respectively coupled to the device connectors 102_1-102_m in the one-to-one manner. The controller 110 is coupled to a control terminal of the antenna switching circuit 220. The controller 110 can control an electrical connection relationship between the antenna ports ANT1-ANTn and the deice ports Port1-Portm. In some embodiments, implementation details of the antenna switching circuit 220 can be deduced according related descriptions of FIG. 3 or FIG. 4.

FIG. 3 is a circuit schematic diagram of the antenna switching circuit 220 of FIG. 2 according to an embodiment of the invention. The antenna switching circuit 220 includes an antenna switch matrix circuit 310. The antenna switch matrix circuit 310 is coupled between the antenna ports ANT1-ANTn and the device ports Port1-Portm. The antenna switch matrix circuit 310 is controlled by the controller 110 to determine the electrical connection relationship between the antenna ports ANT1-ANTn and the device ports Port1-Portm.

In the embodiment of FIG. 3, the antenna switch matrix circuit 310 includes a plurality of switches SW_{i,j}, where i is an integer from 1 to m, and j is an integer from 1 to n. The switches SW_{i,j} respectively have a common terminal, a first selection terminal and a second selection terminal. Under control of the controller 110, the switch SW_{i,j} selects to couple the common terminal thereof to the first selection terminal or the second selection terminal thereof. The common terminal of the switch SW_{i,1} is coupled to an i^{th} device port Porti in the device ports Port1-Portm. For example, the common terminal of the switch SW_{1,1} is coupled to the device port Port1, and the common terminal of the switch SW_{m,1} is coupled to the device port Portm. The common terminals of the other switches SW_{i,j} are respectively coupled to the second selection terminals of the switch SW_{i,j-1}. For example, the common terminal of the switch SW_{1,2} is coupled to the second selection terminal of the switch SW_{1,1}, and the common terminal of the switch SW_{m,2} is coupled to the second selection terminal of the switch SW_{m,1}. The first selection terminal of the switch SW_{i,j} is coupled to a j^{th} antenna port ANTj in the antenna ports ANT1-ANTn. For example, the first selection terminals of the switch SW_{1,2} and the switch SW_{m,2} are all coupled to the second antenna port ANT2. The second selection terminal of the switch SW_{1,j} is coupled to the common terminal of the switch SW_{i,j+1}. For example, the second selection terminal of the switch SW_{1,2} is coupled to the common terminal of the switch SW_{i,3}. The switches SW_{i,j} are controlled by the controller 110 to determine the electrical connection relationship between the antenna ports ANT1-ANTn and the device ports Port1-Portm.

FIG. 4 is a circuit schematic diagram of the antenna switching circuit 220 of FIG. 2 according to another embodiment of the invention. Implementation details of the antenna switching circuit 220 of FIG. 4 can be deduced with reference of related descriptions of FIG. 3. Referring to FIG. 4, the antenna switching circuit 220 includes an antenna switch matrix circuit 310 and initial switches SW_{1,0}, ..., SW_{m,0}. Common terminals of the initial switches SW_{1,0}, ..., SW_{m,0} are respectively coupled to the corresponding device port in the device ports Port1-Portm in a one-to-one manner. For example, the common terminal of the initial switch SW_{1,0} is coupled to the device port Port1, and the common terminal of the initial switch SW_{m,0} is coupled to the device port Portm. First selection terminals of the initial switches SW_{1,0}-SW_{m,0} are respectively coupled to a corresponding default antenna port in a plurality of default antenna ports P1_Default, ..., Pm_default of the antenna switching circuit 220 in the one-to-one manner. For example, the first selection terminal of the initial switch SW_{1,0} is coupled to the default antenna port P1_Default, and the first selection terminal of the initial switch SW_{m,0} is coupled to the default antenna port Pm_Default. Under control of the controller 110, the initial switches SW_{1,0}-SW_{m,0} respectively select to couple the common terminal thereof to the first selection terminal or the second selection terminal thereof. In an initial status of the antenna distribution controller 200, the controller 110 can respectively couple the device ports Port1-Portm to the default antenna ports P1_Default-Pm_Default. The default antenna ports P1_Default-Pm_Default are respectively coupled to different default antennas (not shown). Description of the default antennas can be deduced according to related description of the external antennas 11_1-11_n. Therefore, in case that the external antennas 11_1-11_n are not allocated to the external wireless communication devices 12_1-12_m, the external wireless communication devices 12_1-12_m may use the default antennas to implement wireless communication.

The antenna switch matrix circuit 310 is coupled between the antenna ports ANT1-ANTn and the second selection terminals of the initial switches SW_{1,0}-SW_{m,0}. The antenna switch matrix circuit 310 is controlled by the controller 110 to determine an electrical connection relationship between the antenna ports ANT1-ANTn and the first selection terminals of the initial switches SW_{1,0}-SW_{m,0}. Therefore, in a normal operation status of the antenna distribution controller 200, the controller 110 can control the initial switches SW_{1,0}-SW_{m,0} and the antenna switch matrix circuit 310 to respectively couple the device ports Port1-Portm to the corresponding antenna ports in the antenna ports ANT1-ANTn or the corresponding default antenna ports in the default antenna port P1_Default-Pm_Default. Therefore, in the normal operation status, the external wireless communication device 12_1-12_m may use the external antennas 11_1-11_n or the default antennas through the antenna distribution controller 200 to implement wireless commutation.

Referring to FIG. 2, in some embodiments, the controller 110 may include a connector mapping table. The connector mapping table can be stored in a non-volatile memory (not shown) or other types of memory device in internal of the controller 110. The connector mapping table may include a port relationship field, an antenna characteristic field and/or other fields. The port relationship field can be used to record the electrical connection relationship between the antenna ports ANT1-ANTn and the device ports Port1-Portm. The antenna characteristic field can be used to record physical specification information such as spectrums/bands, gain values, types, locations or other antenna characteristic information of the external antennas 11_1-11_n coupled to the antenna ports ANT1-ANTn. In some other embodiments, the connector mapping table may record the default antenna ports corresponding to the device ports Port1-Portm. In some other embodiments, the connector mapping table may record available/restricted mapped ports in the antenna ports ANT1-ANTn that correspond to the device ports Port1-Portm, and/or record currently used antenna ports in the antenna ports ANT1-ANTn. In other embodiments, the connector mapping table may record a usage policy/rules of the antenna ports ANT1-ANTn.

For example, in some applications, the controller 110 can connect the device port Port1 to the antenna port ANT1 and connect the device port Portm to the antenna port ANT2 during day time, while connect the device port Port1 to the antenna port ANTn and connect the device port Portm to the antenna port ANT3 at night. In some other applications, the external antennas 11_1 and 11_3 are disposed outdoors at different locations, and the external antennas 11_2 and 11_n are respectively disposed in home in different rooms, so that the controller 110 can connect the device ports Port1 and Portm to the antenna ports ANT2 and ANTn when the user is at home, and connect the device ports Port1 and Portm to the antenna ports ANT1 and ANT3 when the user leaves home. In some other applications, the controller 110 can select to connect the device ports Port1 and Portm to the antenna port ANT1, ANT2, ANT3 or the antenna port ANTn according to attenuation characteristics and/or coverage of the external antennas 11_1 and 11_n.

Therefore, the antenna distribution controller 200 of FIG. 2 may intelligently switch/change the electrical connection relationship between the antenna ports ANT1-ANTn and the device ports Port1-Portm, such that the external wireless communication device 12_1-12_m may strengthen and/or extend coverage of a target region, or select a different coverage. The antenna distribution controller 200 may centrally control the coverage of the antenna. The antenna distribution controller 200 may reduce an interference between the external wireless communication devices 120_1-12_m.

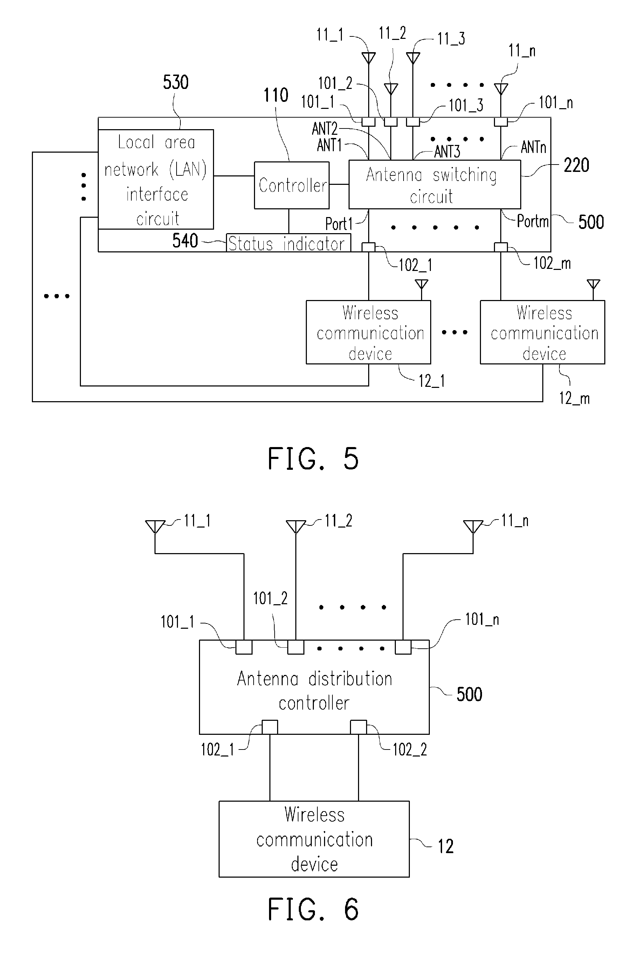

FIG. 5 is a circuit block schematic diagram of an antenna distribution controller according to another embodiment of the invention. Implementation details of the antenna distribution controller of FIG. 5 can be deduced with reference of related descriptions of FIG. 1 and FIG. 2. In the embodiment of FIG. 5, the antenna distribution controller 500 includes antenna connectors 101_1-101_n, device connectors 102_1-102_m, a controller 110, an antenna switching circuit 220, a local area network (LAN) interface circuit 530 and a status indicator 540. The LAN interface circuit 530 and the status indicator 540 are coupled to the controller 110. The status indicator 540 may include a light, a horn and/or a liquid crystal display. The status indicator 540 may present a current operation status and/or antenna allocation status of the antenna distribution controller 500. In other embodiments, the controller 110 may notify/send the current operation status and/or antenna allocation status of the antenna distribution controller 500 to the external wireless communication devices 12_1-12_m and/or other electronic devices (for example, smart phones, table PCs, etc.) through the LAN interface circuit 530. In some embodiments, the status indicator 540 can be omitted.

The LAN interface circuit 530 is coupled to the controller 110. The LAN interface circuit 530 may include a wired LAN (for example, Ethernet) interface circuit and/or a wireless LAN (for example, WiFi network) interface circuit. The controller 110 is configured to communicate with the external wireless communication devices 12_1-12_m through the LAN interface circuit 530 in a wired or wireless manner. For example, the controller 110 provides usage information of the external antennas 11_1-11_n to the external wireless communication devices 12_1-12_m through the LAN interface circuit 530. For another example, the controller 110 provides configuration information of the external antennas 11_1-11_n (for example, specifications, installation heights, installation positions or other information of the external antennas 11_1-11_n) to the external wireless communication devices 12_1-12_m through the LAN interface circuit 530. Therefore, according to the information provided by the antenna distribution controller 500, the external wireless communication devices 12_1-12_m may learn specifications, locations and coverage of the external antennas 11_1-11_n coupled to the antenna distribution controller 500, and an occupation status of the external antennas 11_1-11_n. The external wireless communication devices 12_1-12_m can determine available external antennas in the external antennas 11_1-11_n according to the information provided by the antenna distribution controller 500, and send antenna demands to the antenna distribution controller 500.

The LAN interface circuit 530 can transmit the antenna demands of the external wireless communication devices 12_1-12_m to the controller 110. The controller 110 correspondingly controls the electrical connection relationship between the antenna ports ANT1-ANTn and the device ports Port1-Portm according to the antenna demands. For example, the external wireless communication device 12_1 may send the antenna demand to the antenna distribution controller 500 to require using the external antenna 11_1, and the external wireless communication device 12_m may send the antenna demand to the antenna distribution controller 500 to require using the external antenna 11_n. The controller 110 can correspondingly control the antenna switching circuit 220 to electrically connect the device port Port1 to the antenna port ANT1 and electrically connect the device port Portm to the antenna port ANTn according to the antenna demands.

In some other embodiments, when a plurality of external wireless communication devices in the external wireless communication devices 12_1-12_m respectively send the antenna demands to the controller 110, the controller 110 can control the electrical connection relationship between the antenna ports ANT1-ANTn and the device ports Port1-Portm of the antenna switching circuit 220 according to corresponding weights of the antenna demands. The weights can be stored in the connector mapping table of the controller 110. The weights may include time information, territory control information, event trigger, quality of service (QoS) priority setting or other priority information. The event trigger may include intrusion sensor triggered information or other event trigger information. Therefore, the antenna controller 500 may centrally control/manage the antenna coverage of the external wireless communication devices 12_1-12_m.

In some embodiments, when a plurality of external wireless communication devices in the external wireless communication devices 12_1-12_m respectively send the antenna demands to the controller 110, and the antenna demands all designate a same external antenna, the controller 110 can control the antenna switching circuit 220 according to the antenna demands to connect the same antenna port in time-division to the external wireless communication devices sending the antenna demands. For example, when the external wireless communication devices 12_1 and 12_m respectively send the antenna demands to the antenna distribution controller 500 to require using the same external antenna 11_3, the controller 110 can control the antenna switching circuit 220 according to the antenna demands of the external wireless communication devices 12_1 and 12_m to connect the antenna port ANT3 to the device ports Port1 and Portm in time-division. Therefore, the external wireless communication devices 12_1 and 12_m may share the external antenna 11_3 in a time-division multiplexing manner. Since the external antenna 11_3 is shared according to the time-division multiplexing manner, the antenna distribution controller 500 can reduce the interference between the external wireless communication devices 12_1 and 12_m.

In some embodiments, when a plurality of external wireless communication devices in the external wireless communication devices 12_1-12_m respectively send the antenna demands to the controller 110, and the antenna demands all designate the external antenna coupled to a same antenna port, the controller 110 can connect the same antenna port to one of the external wireless communication devices sending the antenna demands according to the corresponding weights of the antenna demands. For example, when the external wireless communication devices 12_1 and 12_m respectively send the antenna demands to the antenna distribution controller 500 to require using the same external antenna 11_3, the controller 110 can determine to connect the antenna port ANT3 to the device port Port1 or the device port Portm according to the corresponding weights of the antenna demands, and notify the external wireless communication device with a lower weight to select the other external antenna. If the weight of the external wireless communication deice 12_1 is higher than that of the external wireless communication device 12_m, the controller 110 determines to connect the antenna port ANT3 to the device port Port1, and notifies the external wireless communication deice 12_m to select the other external antenna. The external wireless communication deice 12_m can select the other external antenna that is not interfered with the external antenna 11_3. Since the antenna distribution controller 500 can arbitrate the antenna usage demands of the external wireless communication devices 12_1-12_m according to a central management manner, the antenna distribution controller 500 can reduce the interference between the external wireless communication devices 12_1-12_m.

FIG. 6 is a schematic diagram of an application of the antenna distribution controller 500 according to an embodiment of the invention. In other applications, the antenna distribution controller 500 of FIG. 6 can be the antenna distribution controller 100 of FIG. 1 or the antenna distribution controller 200 of FIG. 2. In the application shown in FIG. 6, the external antenna 11_1 can be placed in a backyard, the external antenna 11_2 can be placed in home, and the external antenna 11_n can be placed in a front yard. The antenna distribution controller 500 can connect the device connectors 102_1 and 102_2 to the antenna connectors 101_1, 101_2 or 101_n according to a location of the user. In some embodiments, the antenna distribution controller 500 can detect the location of the user through sensors arranged in the environment. In some other embodiments, the user can transmit an antenna configuration command to the antenna distribution controller 500 through a wired or wireless channel by using an application program of an electronic device (for example, a mobile phone, a tablet PC, etc.), and the antenna distribution controller 500 changes the connection relationship between the device connectors 102_1-102_2 and the antenna connectors 101_1-101_n. Therefore, the antenna distribution controller 500 of FIG. 6 can intelligently switch/change the electrical connection relationship between the external antennas 11_1-11_n and the external wireless communication device 12, and the external wireless communication device 12 can strengthen and/or extend a RF signal coverage of the target region, or select a different coverage.

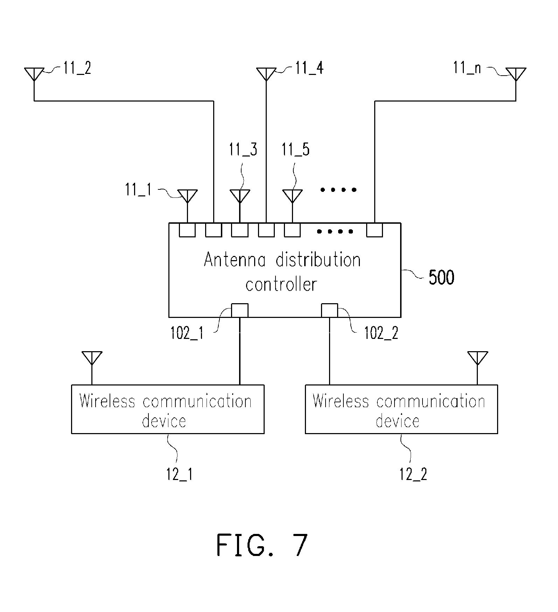

FIG. 7 is a schematic diagram of an application of the antenna distribution controller 500 according to another embodiment of the invention. In other applications, the antenna distribution controller 500 of FIG. 7 can be the antenna distribution controller 100 of FIG. 1 or the antenna distribution controller 200 of FIG. 2. In the application shown in FIG. 7, the external antennas 11_2, 11_4 and 11_n can be placed at different remote sites, and the external antennas 11_1, 11_3 and 11_5 can be placed at different local sites. The antenna distribution controller 500 can respectively connect the device connectors 102_1 and 102_2 to the antenna connectors 101_1, 101_2, 101_3, 101_4, 101_5 or 101_n according to demands of the external wireless communication devices 12_1-12_2. Therefore, the antenna distribution controller 500 of FIG. 7 may intelligently switch/change the electrical connection relationship between the external antennas 11_1-11_n and the external wireless communication devices 12_1-12_2, such that the external wireless communication devices 12_1-12_2 may strengthen and/or extend the RF signal coverage of the target region or select a different coverage. Besides that the external wireless communication devices 12_1-12_2 can use the external antennas 11_1-11_n of the remote sites or the local sites through the antenna distribution controller 500, the external wireless communication devices 12_1-12_2 can also use their own exclusive antennas.

In summary, the controller 110 of the embodiments of the invention can control the antenna switching circuit to change the electrical connection relationship between the antenna ports and the device ports, so that the antenna distribution controller can centrally control the antenna coverage of one or a plurality of external wireless communication devices. The antenna distribution controller can intelligently switch/change the electrical connection relationship between the external antennas 11_1-11_n and the external wireless communication devices 12_1-12_m, such that the external wireless communication devices 12_1-12_m may strengthen and/or extend the coverage of the target region or select a different coverage. The antenna distribution controller may reduce the interference between the external wireless communication devices 12_1-12_m.

## Claims

1. An antenna distribution controller (100, 200, 500), comprising:
a plurality of antenna connectors (101_1, 101_2, 101_3, 101_n), configured to connect at least one external antenna (11_1, 11_2, 11_3, 11_4, 11_5, 11_n);
at least one device connector (102_1, 102_2, 102_m), configured to connect at least one external wireless communication device (12, 12_1, 12_2, 12_m);
an antenna switching circuit (120, 220), having a plurality of antenna ports (ANT1, ANT2, ANT3, ANTn) and at least one device port (Port1, Portm), wherein the antenna ports (ANT1, ANT2, ANT3, ANTn) are respectively coupled to one of the antenna connectors (101_1, 101_2, 101_3, 101_n), and the at least one device port (Port1, Portm) is coupled to one of the at least one device connector (102_1, 102_2, 102_m); and
a controller (110), coupled to a control terminal of the antenna switching circuit (120, 220), and configured to control an electrical connection relationship between the antenna ports (ANT1, ANT2, ANT3, ANTn) and the at least one device port (Port1, Portm).

2. The antenna distribution controller (100, 200, 500) as claimed in claim 1, wherein the antenna switching circuit (120, 220) comprises:
an antenna switch matrix circuit (310), coupled between the antenna ports (ANT1, ANT2, ANT3, ANTn) and the at least one device ports (Port1, Portm), wherein the antenna switch matrix circuit (310) is controlled by the controller (110) to determine the electrical connection relationship between the antenna ports (ANT1, ANT2, ANT3, ANTn) and the at least one device port (Port1, Portm).

3. The antenna distribution controller (100, 200, 500) as claimed in claim 2, wherein the antenna switch matrix circuit (310) comprises:
a plurality of switches SW_{i,j}, respectively having a common terminal, a first selection terminal and a second selection terminal, wherein i and j are integers, the common terminal of the switch SW_{i,1} is coupled to an i^{th} device port in the at least one device port (Port1, Portm), the common terminal of the switch SW_{i,j} is coupled to the second selection terminal of the switch SW_{i,j-1}, the first selection terminal of the switch SW_{i,j} is coupled to a j^{th} antenna port in the antenna ports (ANT1, ANT2, ANT3, ANTn), and the second selection terminal of the switch SW_{1,j} is coupled to the common terminal of the switch SW_{i,j+1}.

4. The antenna distribution controller (100, 200, 500) as claimed in claim 1, wherein the antenna switching circuit (120, 220) further has a plurality of default antenna ports (P1_Defult, Pm_Defult), and the antenna switching circuit (120, 220) comprises:
a plurality of initial switches (SW_{1,0}, SW_{m,0}), having common terminals respectively coupled to a corresponding device port in the at least one device port (Port1, Portm), and first selection terminals respectively coupled to a corresponding default antenna port in the default antenna ports (P1_Defult, Pm_Defult); and
an antenna switch matrix circuit (310), coupled between the antenna ports (ANT1, ANT2, ANT3, ANTn) and second selection terminals of the initial switches (SW_{1,0}, SW_{m,0}), wherein the antenna switch matrix circuit (310) is controlled by the controller (110) to determine an electrical connection relationship between the antenna ports (ANT1, ANT2, ANT3, ANTn) and the second selection terminals of the initial switches (SW_{1,0}, SW_{m,0}).

5. The antenna distribution controller (100, 200, 500) as claimed in claim 1, wherein the controller (110) comprises:
a connector mapping table, comprising a port relationship field and an antenna characteristic field, wherein the port relationship field is configured to record the electrical connection relationship between the antenna ports (ANT1, ANT2, ANT3, ANTn) and the at least one device port (Port1, Portm), the antenna characteristic field is configured to record physical specification information of the at least one external antenna (11_1, 11_2, 11_3, 11_4, 11_5, 11_n) coupled to the antenna ports (ANT1, ANT2, ANT3, ANTn).

6. The antenna distribution controller (100, 200, 500) as claimed in claim 1, further comprising:
at least one local area network interface circuit (530), coupled to the controller (110), wherein the controller (110) is configured to communicate with the at least one external wireless communication device (12, 12_1, 12_2, 12_m) through the at least one local area network interface circuit (530).

7. The antenna distribution controller (100, 200, 500) as claimed in claim 6, wherein the controller (110) is configured to provide usage information of the at least one external antenna (11_1, 11_2, 11_3, 11_4, 11_5, 11_n) to the at least one external wireless communication device (12, 12_1, 12_2, 12_m) through the at least one local area network interface circuit (530).

8. The antenna distribution controller (100, 200, 500) as claimed in claim 6, wherein the controller (110) is configured to provide configuration information of the at least one external antenna (11_1, 11_2, 11_3, 11_4, 11_5, 11_n) to the at least one external wireless communication device (12, 12_1, 12_2, 12_m) through the at least one local area network interface circuit (530).

9. The antenna distribution controller (100, 200, 500) as claimed in claim 8, wherein the configuration information comprises a specification, an installation height or installation position of the at least one external antenna (11_1, 11_2, 11_3, 11_4, 11_5, 11_n).

10. The antenna distribution controller (100, 200, 500) as claimed in claim 6, wherein the at least one local area network interface circuit (530) is configured to transmit an antenna demand of the at least one external wireless communication device (12, 12_1, 12_2, 12_m) to the controller (110), and the controller (110) is configured to control the electrical connection relationship between the antenna ports (ANT1, ANT2, ANT3, ANTn) and the at least one device port (Port1, Portm) according to the antenna demand.

11. The antenna distribution controller (100, 200, 500) as claimed in claim 1, wherein when a plurality of the external wireless communication devices (12, 12_1, 12_2, 12_m) respectively send antenna demands to the controller (110), the controller (110) controls the electrical connection relationship between the antenna ports (ANT1, ANT2, ANT3, ANTn) and the at least one device port (Port1, Portm) of the antenna switching circuit (120, 220) according to weights corresponding to the antenna demands.

12. The antenna distribution controller (100, 200, 500) as claimed in claim 11, wherein the weight comprises time information, territory control information, an event trigger, a quality of service (QoS) priority setting.

13. The antenna distribution controller (100, 200, 500) as claimed in claim 1, wherein when a plurality of the external wireless communication devices (12, 12_1, 12_2, 12_m) respectively send antenna demands to the controller (110), and the antenna demands all designate an external antenna coupled to a same antenna port, the controller (110) controls the antenna switching circuit (120, 220) according to the antenna demands to connect the same antenna port in time-division to the external wireless communication devices (12, 12_1, 12_2, 12_m) sending the antenna demands.

14. The antenna distribution controller (100, 200, 500) as claimed in claim 1, wherein when a plurality of the external wireless communication devices (12, 12_1, 12_2, 12_m) respectively send antenna demands to the controller (110), and the antenna demands all designate an external antenna coupled to a same antenna port, the controller (110) determines to connect the same antenna port to one of the external wireless communication devices (12, 12_1, 12_2, 12_m) sending the antenna demands according to weights corresponding to the antenna demands.
